# EUROPÄISCHE PATENTSCHRIFT

(11) **EP 0 421 321 B1**
(45) Veröffentlichungstag und Bekanntmachung des Hinweises auf die Patenterteilung: **23.02.1994**
(21) Anmeldenummer: 90118801.1
(22) Anmeldetag: 01.10.1990
(51) Int. Cl.: A47K 10/10, F16B 7/04

(54) **Einrichtung zur Befestigung einer sanitären Trockenarmatur**
Mouting device for bathroom accessory support
Dispositif de fixation d'un support d'accessoire de salle de bain

(30) Priorität: 04.10.1989 DE 3933132
(43) Veröffentlichungstag der Anmeldung: 10.04.1991
(73) Patentinhaber: HANSA METALLWERKE AG, D-70567 Stuttgart (DE)
(72) Erfinder: Kress, Hermann, W-7024 Filderstadt 1 (DE)
(74) Vertreter: Ostertag, Ulrich

(56) Entgegenhaltungen:
- DE-B- 1 110 388
- DE-U- 8 320 860
- DE-U- 8 802 016
- FR-A- 2 137 405
- GB-A- 2 215 425

## Beschreibung

Die Erfindung betrifft eine Einrichtung zur Befestigung einer sanitären Trockenarmatur mit
a) einem wandseitigen Befestigungsteil, welches an einer Gebäudewand anschraubbar ist;
b) einem armaturenseitigen Befestigungsteil, welches an dem wandseitigen Befestigungsteil unter Klemmwirkung festlegbar ist, wobei eines der beiden Beffestigungsteile steckerartig in das jeweils andere Befestigungsteil eingreift.

Unter sanitären Trockenarmaturen werden im Gegensatz zu Wasserhähnen oder dergleichen nicht wasserführende Badeausstattungsarmaturen, z.B. Handtuchhalter, Zahnputzglashalter, Konsolenhalter für Glasplatten, Wannenhalter, Lampenhalter, WC-Bürstenhalter usw. verstanden. Bei deren Befestigung an der Gebäudewand ergeben sich Probleme insofern, als trotz kleiner Auflagefläche eine stabile Befestigung geschaffen werden muß. Dabei sind Toleranzen auszugleichen, damit nach der Befestigung kein Spiel vorliegt.

Eine Einrichtung der eingangs genannten Art ist aus dem DE-U-88 02 016 bekannt. Hier wird die Klemmwirkung dadurch erzielt, daß der mittlere Teil des Befestigungsbolzens, bei dem es sich um keinen Gewindebolzen handelt, gegenüber den lagernden beiden Enden exzentrisch versetzt ist. Bei der Verdrehung des Bolzens, der mit seinem mittleren exzentrischen Teil an einer Bohrung des armaturenseitigen Befestigungsteiles anliegt, wird letzteres gegen das wandseitige Befestigungsteil gezogen und dabei verklemmt. Der mögliche Hub der Relativbewegung, welche die beiden Befestigungsteile gegeneinander ausführen, ist dabei vergleichsweise gering und im wesentlichen auf die Exzentrizität des mittleren Teils des Befestigungsbolzens gegenüber den lagernden beiden Enden beschränkt.

Eine ähnliche Einrichtung ist in der EP-B-0 130 234 beschrieben. Hier umfaßt das wandseitige Befestigungsteil eine hohlzylindrische, geschlitzte Aufnahme, in die als armaturenseitiges Befestigungsteil eine zylindrische Welle mit abgeflachten Bereichen eingeführt werden kann. Diese Welle ist dort, wo sie in der zylindrischen Aufnahme des wandseitigen Befestigungsteiles verläuft, gegenüber der Drehachse exzentrisch. Dies führt dazu, daß beim Verdrehen der Welle die beiden Befestigungsteile unter Ausgleich eventuell vorhandenen Spieles aufeinander zu gezogen werden. Nachteilig bei dieser bekannten Einrichtung ist, daß der "Anzugsbereich", der durch die Exzentrizität der drehbaren Welle bestimmt ist, in vielen Fällen nicht ausreicht.

Aus der DE-A-31 05 216 ist es bekannt, das armaturenseitige Befestigungsteil in eine Aufnahmebohrung des wandseitigen Befestigungsteiles einzuführen und dort durch einen federgestrammten Druckstift zu sichern. Damit diese Befestigungsart spielfrei arbeitet, sind sehr präzise Toleranzen erforderlich.

Aus dem DE-U-83 20 860 ist bekannt, eine sanitäre Trockenarmatur dadurch an einem wandseitigen Befestigungsteil anzubringen, daß beide Befestigungsteile mit Hinterschneidungen versehen sind, in welche das armaturenseitige Befestigungsteil eingehängt werden kann, wo es durch eine Befestigungsschraube gesichert wird. Dieses System ist jedoch für einen konzentrischen Aufbau der beiden Befestigungsteile nicht geeignet.

Die DE-B-1 110 388 beschreibt ein Spannelement für Metallhohlpfosten. Dessen effektive Länge kann dadurch variabel gemacht werden, daß ein Druckstück nach oben ausgefahren wird. Hierdurch läßt sich der Metallhohlpfosten zwischen der Decke und dem Boden eines Gebäudes verspannen.

Aufgabe der vorliegenden Erfindung ist es, eine Einrichtung der eingangs genannten Art derart auszugestalten, daß ein großer "Anzugsbereich" gegeben ist, daß also auch große Spiele ausgeglichen werden können.

Diese Aufgabe wird erfindungsgemäß dadurch gelöst, daß
c) eines der beiden Befestigungsteile steckerartig in das jeweils andere Befestigungsteil eingreift und einen quer zu seiner Achse verlaufenden Durchbruch aufweist, in dem ein Gleitstein verschiebbar aber unverdrehbar angeordnet ist;
d) in einer Ausnehmung des jeweils anderen Befestigungsteils ein Gewindebolzen gelagert und in axialer Richtung festgelegt ist, der durch eine Gewindebohrung des Gleitsteines derart hindurchgeführt ist, daß eine Verdrehung des Gewindebolzens eine Verschiebung des Gleitsteines in dem Durchbruch bewirkt;
e) eine Einrichtung vorgesehen ist, welche die Verschiebung des Gleitsteines in dem Durchbruch in eine Relativbewegung der beiden Befestigungsteile aufeinander zu oder voneinander weg umsetzt.

Erfindungsgemäß findet also eine doppelte Bewegungsumsetzung statt: zunächst wird die Drehbewegung des Gewindebolzens, an dem ein äußeres Werkzeug ansetzen kann, in eine Bewegung des Gleitsteines innerhalb des Durchbruches umgesetzt, die grob gesprochen quer zu der Bewegungsrichtung ist, die die beiden Befestigungsteile relativ zueinander ausführen sollen. Diese Bewegung des Gleitsteines wird dann durch eine gesonderte Einrichtung erneut umgesetzt und zwar in die gewünschte, hierzu annähernd senkrechte Bewegungsrichtung der beiden Befestigungsteile. Dadurch, daß der Gleitstein eine im wesentlichen lineare Bewegung ausführt, die nur durch die äußeren Abmessungen des zugeordneten Befestigungsteiles in ihrer Erstreckung begrenzt ist, können erhebliche "Anzugsbereiche" verwirklicht werden, mit denen sich auch größere Spiele ausgleichen lassen. Die Toleranzen bei der Fertigung einer erfindungsgemäßen Einrichtung können also sehr großzügig bemessen sein. Dies verbilligt die Herstellung und erleichtert gleichwohl die Montage der sanitären Trockenarmatur vor Ort.

Bei einer Ausführungsform der Erfindung umfasst die Einrichtung, welche die Verschiebung des Gleitsteines in eine Relativbewegung der beiden Befestigungsteile umsetzt, eine Feder, die bei der Bewegung des Gleitsteines komprimierbar ist, hierbei ihre Abmessung quer zu dieser Bewegungsrichtung vergrößert und dabei eine Seitenfläche des Durchbruches mit einer Kraft beaufschlagt, welche die beiden Befestigungsteile zusammenzuziehen sucht. Bei dieser Anordnung können die Seitenflächen des Durchbruches exakt senkrecht zur Relativbewegung der beiden Befestigungsteile verlaufen. Die Feder setzt die Kraft, die parallel zum Gewindebolzen durch dessen Verdrehung erzeugt wird, durch ihre elastische Verformung in eine hierzu senkrecht gerichtete Kraft um. Eine Vorteil dieser Befestigungsart ist die Elastizität, mit welcher die beiden Befestigungsteile aneinander gebunden sind.

Bei der Feder kann es sich um eine gebogene Blattfeder oder auch um ein elastisches Kissen handeln. Insbesondere gummielastische Teile haben bekanntlich die Eigenschaft, daß ihr Volumen bei der elastischen Beaufschlagung nicht veränderbar ist; ein Zusammendrücken in der einen Richtung wird also durch eine Aufweitung der Dimension in der hierzu senkrechten Richtung beantwortet. Dies ist die Eigenschaft, die für eine erfindungsgemäße Feder gewünscht wird.

Alternativ kann die Einrichtung, welche die Verschiebung des Gleitsteines in dem Durchbruch in eine Relativbewegung der beiden Befestigungsteile umsetzt, auch eine schräg zur Achse der Befestigungsteile verlaufende Begrenzungsfläche des Gleitsteines sein, die mit einer parallelen Begrenzungsfläche des Durchbruches zusammenwirkt. Beim Verdrehen des Schraubbolzens, der unter diesen Bedingungen ebenfalls in einem schrägen Winkel zu den beiden Begrenzungsflächen von Gleitstein und Durchbuch steht, wird außer der Kraftkomponente parallel zum Gewindebolzen auch eine Kraftkomponente senkrecht zum Gewindebolzen, also in Richtung der gewünschten Relativbewegung der beiden Befestigungsteile, erzeugt. Diese Ausgestaltung hat den Vorteil, daß zusätzliche Bauteile für die Einrichtung, welche die Bewegung des Gleitsteines in eine Relativbewegung der Befestigungsteile umsetzt, nicht erforderlich sind.

Wenn die beiden Befestigungsteile voneinander getrennt sind, wenn insbesondere also auch der Gewindebolzen aus dem Gleitstein herausgeschraubt ist, sollte eine unbeabsichtigte Verschiebung des Gleitsteines innerhalb des Durchbruches nach Möglichkeit vermieden werden. Hierzu dient nach einem weiteren Merkmal der Erfindung ein Federelement, welches zwischen dem Gleitstein und einer Begrenzungsfläche des Durchbruches wirkt. Dieses Federelement stellt somit eine Art "Reibungsbremse" dar, die nur unter Aufbietung größerer Kräfte, wie sie etwa vom Gewindebolzen bereitgestellt werden, überwindbar ist.

Wenn, wie oben erwähnt, die Einrichtung zur Umsetzung der Bewegung des Gleitsteines in eine Bewegung der Befestigungselemente eine Feder ist, ist zweckmäßigerweise das Federelement ein Bereich dieser Feder. Die Feder erfüllt dann eine Doppelfunktion: Mit dem einen Bereich verhindert sie eine unbeabsichtigte Verschiebung des Gleitsteines in dem Durchbruch; mit dem anderen Bereich setzt sie die Bewegung des Gleitsteines in eine Relativbewegung der Befestigungsteile um.

Das Federelement kann eine gebogene Blattfeder oder auch ein einstückig an den Gleitstein angeformten Federbereich sein.

Soll die Befestigungseinrichtung mit einer besonders geringen Aufstandsfläche an der Gebäudewand auskommen, ist eine Ausführungsform der Erfindung vorteilhaft, bei welcher das wandseitige Befestigungsteil becherförmig ausgebildet ist, mit seiner Bodenfläche an der Gebäudewand anliegt und an dieser mit einer zentralen Schraube befestigt ist.

Wenn dagegen etwas mehr Platz zur Verfügung steht und eine mechanische besonders stabile Befestigung an der Wand gewünscht wird, kann eine Ausgestaltung gewählt werden, bei welcher das wandseitige Befestigungsteil ein ebener Flansch ist, der in mittleren Bereich einen zylindrischen Vorsprung aufweist, in welchem der Durchbruch ausgebildet ist, wobei das wandseitige Befestigungsteil im äußeren Bereich mit mehrerer Befestigungsschrauben an der Gebäudewand befestigt ist und wobei das armaturenseitige Befestigungsteil an seinen Enden einen zylindrischen Innenraum aufweist, in den der zylindrische Vorsprung des wandseitigen Befestigungsteiles einführbar ist.

Bei dieser Ausgestaltung kann sich empfehlen, an das armaturenseitige Befestigungsteil einen Ringflansch anzuformen, der den äußeren Bereich des wandseitigen Befestigungsteiles mit den Befestigungsschrauben abdeckt.

Ausführungsbeispiele der Erfindung werden nachfolgend anhand der Zeichnung näher erläutert; es zeigen
- Figur 1: einen Axialschnitt durch ein erstes Ausführungsbeispiel einer Einrichtung zur Befestigung einer sanitären Trockenarmatur gemäß Linie I-I von Figur 2;
- Figur 2: einen Schnitt gemäß Linie II-II von Figur 1;
- Figur 3: einen senkrechten Axialschnitt durch ein zweites Ausführungsbeispiel einer Einrichtung zur Befestigung einer sanitären Trockenarmatur gemäß Linie III-III von Figur 4;
- Figur 4: einen Schnitt gemäß IV-IV von Figur 3;
- Figuren 5 und 6: vertikale Axialschnitte durch zwei weitere Ausführungsbeispiele einer Einrichtung zur Befestigung einer sanitären Trockenarmatur.

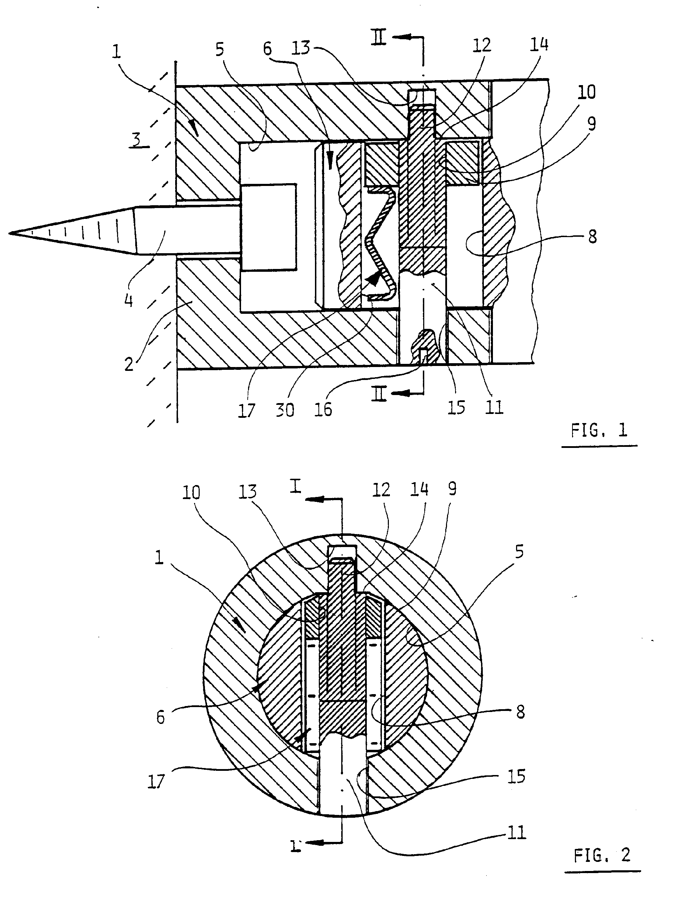

Die in Figur 1 dargestellte Einrichtung zur Befestigung einer sanitären Trockenarmatur umfasst ein wandseitiges Befestigungsteil 1, welches becherförmig gestaltet ist. Es liegt mit seiner Bodenfläche 2 an der Gebäudewand 3 an und wird an dieser durch eine zentrale, sich von innen nach außen erstreckende Schraube 4 befestigt.

In den in Figur 1 nach rechts offenen zylindrischen Innenraum 5 des wandseitigen Befestigungsteiles 1 ist ein armaturenseitiges Befestigungsteil 6 nach Art einer Stecker-Kupplung-Verbindung eingeschoben. Es hat eine zum Querschnitt des Innenraumes 5 des wandseitigen Befestigungsteiles 1 komplementäre Querschnittsform, im Ausführungsbeispiel von Figur 1 also einen kreisförmigen Querschnitt. Das armaturenseitigen Befestigungsteil 6 kann mit der eigentlichen sanitären Trockenarmatur 7 (die in der Zeichnung nur teilweise dargestellt ist) einstückig sein; letztere kann an dem armaturenseitigen Befestigungsteil aber auch in sonstiger, beliebiger Weise lösbar befestigt werden.

Das armaturenseitige Befestigungsteil 6 wird von einem im Querschnitt rechteckigen Durchbruch 8, dessen Begrenzungslinien senkrecht zur Achse von wandseitigem Befestigungsteil 1 und armaturenseitigem Befestigungsteil 6 verlaufen, durchsetzt. In dem Durchbruch 8 ist ein Gleitstein 9, der eine zum Durchbruch 8 komplementäre Außenkontur aufweist, verschiebbar angeordnet. Durch eine Gewindebohrung 10 des Gleitsteines 9 ist ein Gewindebolzen 11 hindurchgeschraubt, der in dem in Figur 1 oberen Ende mit einem im Durchmesser verringerten Zapfenbereich 12 in einer Sackbohrung 13 des wandseitigen Befestigungsteiles 1 gelagert ist. Der Gewindebolzen 11 stützt sich dabei mit einer den Übergang zum Zapfenbereich 12 bildenden Ringschulter 14 an der Wand des Innenraumes 5 des wandseitigen Befestigungsteiles 1 ab.

Das dem Zapfenbereich 12 gegenüberliegende Ende des Gewindebolzens 11 ist durch eine Durchgangsbohrung 15 des wandseitigen Befestigungsteiles 1 hindurchgeführt und fluchtet mit dessen äußerer Mantelfläche. An einem Schlitz 16 kann ein Schraubendreher oder ein anderes geeignetes Werkzeug eingesetzt werden, mit dem sich der Gewindebolzen 11 verdrehen läßt.

An der in Figur 1 unteren Stirnseite des Gleitsteines 9, zwischen der in Figur 1 linken Begrenzungsfläche 30 des Durchbruches 8 des armaturenseitigen Befestigungsteiles 6 und dem Schraubbolzen 11 ist eine Blattfeder 17 befestigt, die im Querschnitt etwa die Form einer "3" aufweist. Befindet sich der Gleitstein 9, wie in Figur 1 dargestellt, im obersten Bereich des Durchbruches 8, so ist die Feder 17 entspannt.

Die in den Figuren 1 und 2 dargestellte Einrichtung zur Befestigung einer sanitären Trockenarmatur funktioniert wie folgt:

Zunächst wird das wandseitige Befestigungsteil 1 mittels der Schraube 4 an der Gebäudewand 3 befestigt. Danach wird das armaturenseitige Befestigungsteil 6, in dessen Durchbruch 8 sich bereits der Gleitstein 9 mit Feder 17 befindet, in den Innenraum 5 des wandseitigen Befestigungsteiles 1 eingeschoben, bis die Gewindebohrung 10 des Gleitsteines 9 mit der Sackbohrung 13 und der Durchgangsbohrung 15 des wandseitigen Befestigungsteiles 1 fluchtet. Nun wird der Gewindebolzen 11 von unten her durch die Durchgangsbohrung 15 in den Innenraum 5 des wandseitigen Befestigungsteiles 1 eingeschoben und in die Gewindebohrung 10 des Gleitsteines 9 eingeschraubt, bis die Ringschulter 14 an der Mantelfläche des Innenraumes 5 anliegt und der Zapfenbereich 12 des Gewindebolzens 11 in der Sackbohrung 13 gelagert ist. Dies ist die in Figur 1 dagestellte Position. Bei anhaltender Verdrehung des Schraubbolzens 11 kann sich dieser nicht mehr weiter in Figur 1 nach oben verlagern; eine weitere Drehung führt nunmehr dazu, daß der Gleitstein 9 sich innerhalb des Durchbruches 8 nach unten zu bewegen beginnt. Da die Feder 17, wie die Figur 2 deutlich macht, nunmehr mit ihrer Unterseite an der Mantelfläche des Innenraumes 5 des wandseitigen Befestigungsteiles 1 zu liegen kommt, wird sie durch die nach unten gerichtete Bewegung des Gleitsteines 9 komprimiert. Auf Grund ihrer Form führt die parallel zur Achse des Gewindebolzens 11 erfolgende Kompression dazu, daß sie ihre Dimension in Richtung der Achse sowohl des wandseitigen Befestigungsteiles 1 als auch des armaturenseitigen Befestigungsteiles 6 vergrößert; sie wird in der Sicht der Figur 1 "breiter". Dabei legt sie sich an die in Figur 1 linke Begrenzungsfläche 30 des Durchbruches 8 in dem armaturenseitigen Befestigungsteil 6 an und übt auf diese Fläche 30 einen Druck aus. Dieser Druck führt dazu, daß das wandseitige Befestigungsteil 6 zusammen mit der sanitären Trockenarmatur 7 in Figur 1 nach links, also auf die Gebäudewand 3 zu gezogen wird. Die Kompression der Feder 17 wird durch Verdrehen des Schraubbolzens 11 so weit fortgeführt, bis die sanitäre Trockenarmatur 7 spielfrei in dem erwünschten Maße an die Gebäudewand 3 herangeführt ist.

Das Spiel, welches bei der in Figur 1 dargestellten Einrichtung zur Befestigung einer sanitären Trockenarmatur zwischen wandseitigem Befestigungsteil 1 und armaturenseitigem Befestigungsteil 6 ausgeglichen werden kann, ist offensichtlich durch die Dimensionsveränderung bestimmt, welche die Feder 17 in Richtung der Achse dieser Befestigungsteile 1, 6 bei der Verschiebung des Gleitsteines 9 in dem Durchbruch 8 des armaturenseitigen Befestigungsteiles 6 erfährt.

Die Feder 17 kann als Sonderform einer Einrichtung verstanden werden, welche die quer zur Achse der Befestigungsteile 1 und 6 erfolgende Bewegung des Gleitsteines 9 in eine parallel zur Richtung dieser Achse erfolgende Bewegung des armaturenseitigen Befestigungsteiles 6 umsetzt.

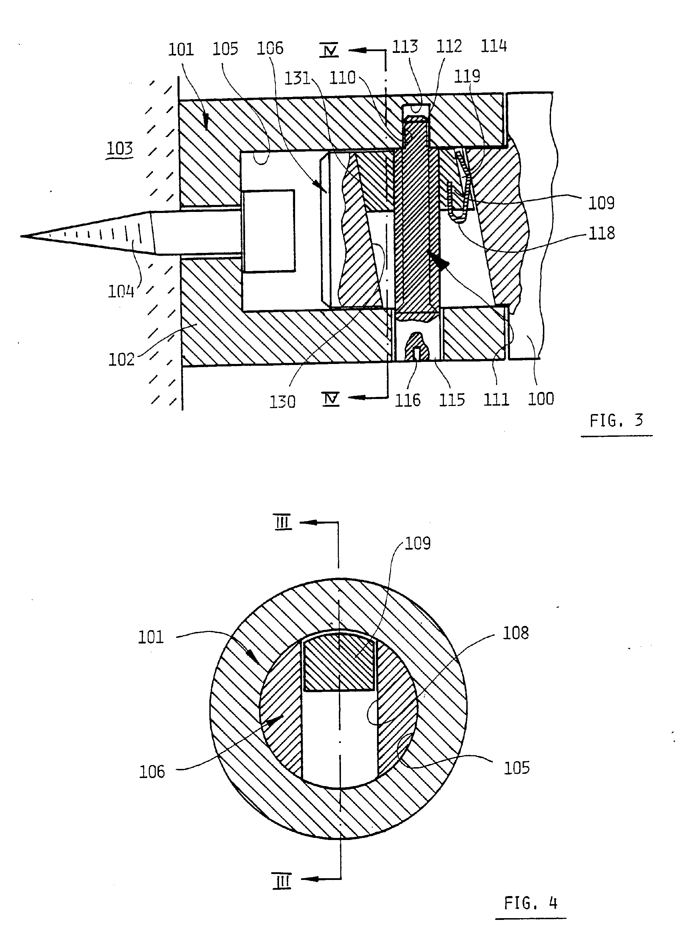

In den Figuren 3 und 4 ist ein weiteres Ausführungsbeispiel einer Einrichtung zur Befestigung einer sanitären Trockenarmatur dargestellt, welches dem oben anhand der Figuren 1 und 2 beschriebenen weitgehend ähnelt. Entsprechende Teile sind daher mit demselben Bezugszeichen zuzüglich 100 gekennzeichnet.

Auch bei dem Ausführungsbeispiel nach den Figuren 3 und 4 findet sich somit ein wandseitiges Befestigungsteil 101, welches mit einer Schraube 104 an der Gebäudewand 103 festgemacht ist Ein armaturenseitiges Befestigungsteil 106, welches mit der sanitären Trockenarmatur 107 einstückig ist, ist in den Innenraum 105 des wandseitigen Befestigungsteiles 101 nach Art eines Steckers eingeschoben.

Des armaturenseitige Befestigungsteil 105 weist einen im Querschnitt rechteckigen Durchbruch auf, dessen seitliche Begrenzungslinien im Schnitt der Figur 3 nunmehr jedoch nicht mehr rechtwinklich sondern schräg zur Achse der Befestigungsteile 1 und 6 verlaufen.

Entsprechend hat der Gleitstein 109, der auch beim Ausführungsbeispiel nach den Figuren 3 und 4 in dem Durchbruch 108 verschiebbar angeordnet ist, in dem Schnitt nach Figur 3 Begrenzungsflächen, die schräg zur Achse der Befestigungsteile 101 und 106 verlaufen.

Wiederum ist ein Gewindebolzen 111 durch eine Durchgangsbohrung 115 und eine Gewindebohrung 110 im Gleitstein 109 hindurchgeführt, liegt mit einer Ringschulter 114 an der Wand des Innenraumes 105 des wandseitigen Befestigungsteiles 101 an und ist mit einem Zapfenbereich 112 in einer Sackbohrung 113 des wandseitigen Befestigungsteiles 101 gelagert.

Eine der Feder 17 des Ausführungsbeispieles nach Figur 1 entsprechende Feder ist in Figur 3 nicht vorgesehen. Bei diesem Ausführungsbeispiel wird vielmehr die Einrichtung, welche die "Querbewegung" des Gleitsteines 109 in dem Durchbruch 108 in eine axiale Bewegung des armaturenseitigen Befestigungsteiles 106 umsetzt, durch die schräg verlaufende Begrenzungsfläche 130 des Durchbruches 108 des armaturenseitigen Befestigungsteiles 106 und die mit dieser zusammenwirkende schräg verlaufende Fläche 131 des Gleitsteines 109 gebildet. Es bedarf angesichts der Figur 3 keiner weiteren Erläuterungen, daß eine durch Verdrehung des Gewindebolzens 111 bewirkte, in Figur 3 nach unten gerichtete Bewegung des Gleitsteines 109 eine Kraftkomponente auf das armaturenseitige Befestigungsteil 106 erzeugt, die dieses in Figur 3 nach links, also auf die Gebäudewand 103 zu bewegt.

Die Funktionsweise des in Figur 3 dargestellten Ausführungbeispieles stimmt also in den Grundprinzipien mit derjenigen des Ausführungsbeispieles nach den Figuren 1 und 2 überein. Ergänzender Ausführungen hierzu bedarf es nicht.

In Figur 3 ist noch eine Feder 118 dargestellt, welche an dem Gleitstein 109 befestigt ist und sich in eine Nut 119 an der an Figur 3 rechten Begrenzungsfläche des Gleitsteines 109 hineinerstreckt. Sie liegt unter elastischer Spannung gleichzeitig an der in Figur 3 rechten Begrenzungsfläche des Durchbruches 108 im armaturenseitigen Befestigungsteil 106 an. Diese Feder 118 hat die Aufgabe, eine unbeabsichtigte Verschiebung des Gleitsteines 109 innerhalb des Durchbruches 108 zu verhindern, wenn das armaturenseitige Befestigungsteil 106 noch nicht in das wandseitige Befestigungsteil 101 eingeschoben und der Gleitstein 109 in seiner Lage noch nicht durch den Gewindebolzen 111 bestimmt ist. Vor dem Zusammenfügen der Befestigungsteile 101 und 106 wird der Gleitstein 109 in dem Durchbruch 108 in derjenigen Stellung positioniert, die in Figur 3 dargestellt ist. Die Feder 118 verhindert dann, daß der Gleitstein 109 undefinierte Bewegungen in dem Durchbruch 108 ausführt.

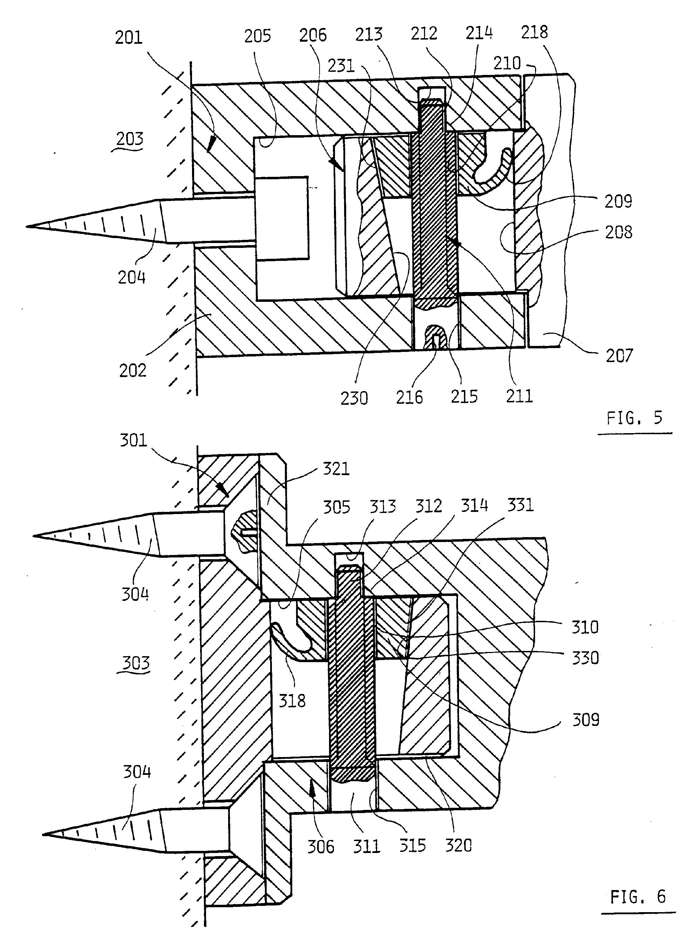

Das Ausführungsbeispiel, welches in Figur 5 dargestellt ist, entspricht weitestgehend demjenigen von Figur 3. Auch hier kann daher auf eine detaillierte Beschreibung verzichtet werden; entsprechende Teile des Ausführungsbeispieles nach Figur 5 sind mit demselben Bezugszeichen wie in Figur 1, jedoch zuzüglich 200, gekennzeichnet.

In das an der Gebäudewand 203 mittels einer Schraube 204 befestigte becherförmige wandseitige Befestigungsteil 201 ist ein armaturenseitiges Befestigungsteil 206, welches mit der Trockenarmatur 207 einstückig ist, eingeschoben. Das armaturenseitige Befestigungsteil 206 weist einen Durchbruch 208 auf, dessen in Figur 5 linke Begrenzungsfläche 230 schräg zur Achse der Befestigungsfläche 201, 206 und dessen in Figur 5 rechte Begrenzungsfläche senkrecht zu dieser Achse verläuft. In dem Durchbruch 208 ist ein Gleitstein 209 verschiebbar angeordnet, der an der in Figur 5 linken Seite mit einer schräg zur Achse der Befestigungsteile 201, 206 verlaufenden Begrenzungsfläche 231 an der parallelen Begrenzungsfläche 230 des Durchbruches 108 anliegt. An der gegenüberliegende Seite ist der Gleitstein 209 mit einem einstückigen Federansatz 218 ausgebildet, der unter elastischer Verformung an der in Figur 5 rechten Begrenzungsfläche des Durchbruches 208 anliegt. Alle übrigen Komponenten stimmen mit denjenigen des Ausführungsbeispieles von Figur 3 überein. Dementsprechend ist auch die Funktion die gleiche.

Führt man das armaturenseitige Befestigungsteil 206 in den Innenraum 205 des an der Gebäudewand 203 angeschraubten wandseitigen Befestigungsteiles 201 ein, so wird zunächst die Gewindebohrung 210 im Gleitstein 209 in Fluchtung mit der Durchgangsbohrung 215 und der Sackbohrung 213 im wandseitigen Befestigungsteil 201 gebracht. Danach wird der Gewindebolzen 211 von unten her in die Gewindebohrung 210 des Gleitsteines 209 eingeschraubt, bis die in Figur 5 dargestellte Position erreicht ist. Eine weitere Verdrehung des Gewindebolzens 211 führt zu einer in Figur 5 nach unten gerichteten Bewegung des Gleitsteines 209 in dem Durchbruch 208, wobei zusätzlich der Federabschnitt 218 des Gleitsteines 209 komprimiert wird. Dies ist jedoch für die nunmehr sich ergebende axiale Bewegung des armaturenseitigen Befestigungsteiles 206 auf die Gebäudewand 203 zu ohne Bedeutung. Wie beim Ausführungsbeispiel von Figur 3 die Feder 118 so verhindert auch der Federabschnitt 218 beim Ausführungsbeispiel nach Figur 5 nur, daß bei ausgebautem armaturenseitigen Befestigungsteil 206 der Gleitstein 209 unerwünschte Bewegungen innerhalb des Durchbruches 208 ausführt.

Das in Figur 6 schließlich dargestellte Ausführungsbeispiel einer Einrichtung zur Befestigung einer sanitären Trockenarmatur stellt eine Art "kinematischer Umkehr" des Ausführungsbeispieles nach Figur 5 dar. Hier sind Komponenten, die solchen der Figur 1 entsprechen, wieder mit demselben Bezugszeichen zuzüglich 300 gekennzeichnet.

In Figur 6 ist das wandseitige Befestigungsteil 301 als Flansch ausgeführt, der mit mehreren Befestigungsschrauben 304 an der Montagewand 303 angebracht wird. Das wandseitige Befestigungsteil 301 ist mit einem einstückig angeformten, zylindrischen Vorsprung 320 ausgestattet, durch den sich ein Durchbruch 308 hindurcherstreckt. Die in Figur 6 linke, der Gebäudewand 203 benachbarte Begrenzungsfläche des Durchbruches 308 läuft senkrecht zur Achse des zylindrischen Vorsprunges 320, während die in Figur 6 wandferne Begrenzungsfläche 330 des Durchbruches 308 gegenüber diese Achse geneigt ist. Die Neigung verläuft jedoch gegensinnig zu derjenigen von Figur 5, was eine unmittelbare Folge der kinematischen Bewegungsumkehr ist.

In dem Durchbruch 308 ist wiederum ein Gleitstein 309 verschiebbar angeordnet, dessen in Figur 6 rechte Begrenzungsfläche 331 parallel zur dortigen Begrenzungsfläche 330 des Durchbruches 308 des zylindrischen Vorsprunges 320 verläuft und an letzterer anliegt. An der gegenüberliegenden, also wandnahen Seite ist an den Gleitstein 309 ein Federabschnitt 318 einstückig angeformt, der unter elastischer Verformung an der linken Begrenzungsfläche des Durchbruches 309 anliegt. Die Anordnung ist ersichtlich wieder so wie bei derjenigen von Figur 5: der Gleitstein 308 bleibt ohne Einwirkung äußerer Kräfte auf Grund des elastischen Federabschnittes 318 in der obersten, in Figur 6 dargestellten Position, wo der Durchbruch 308 an weitesten ist.

Das armaturenseitige Befestigungsteil 306 ist mit einem zylindrischen, zum Vorsprung 320 des wandseitigen Befestigungsteiles 301 komplementären Innenraum 305 versehen, der über den zylindrischen Vorsprung 320 geschoben werden kann. Außerdem ist an das armaturenseitige Befestigungsteil 306 ein Ringflansch 321 angeformt, der die Befestigungsschrauben 304 abdeckt.

Ein Gewindebolzen 311 ist durch eine Durchgangsbohrung 315 im armaturenseitigen Befestigungsteil 306 hindurchgeführt und in eine Gewindebohrung 310 des Gleitsteines 309 eingeschraubt. Er liegt mit einer Ringschulter 314 an der Mantelfläche des Innenraumes 305 des armaturenseitigen Befestigungsteiles 306 an. Ein im Durchmesser verringerter Zapfenabschnitt 312 des Gewindebolzens 311 ist in einer Sackbohrung 313 des armaturenseitigen Befestigungsteiles 306 gelagert.

Versucht man, ausgehend von der in Figur 6 dargestellten Position, den Gewindebolzen 311 weiter in die Gewindebohrung 310 des Gleitsteines 309 einzuschrauben, so wird diese Drehbewegung in eine in Figur 6 nach unten gerichtete Transversalbewegung des Gleitsteines 309 umgesetzt. Auf Grund der Keilwirkung zwischen den in Figur 6 rechten Begrenzungsflächen 331, 330 des Gleitsteines 309 und des Durchbruches 308 wird diese Querbewegung des Gleitsteines 309 in eine axiale, auf die Wand gerichtete Bewegung des armaturenseitigen Befestigungsteiles 306 umgesetzt.

Bei den Ausführungsbeispielen nach den Figuren 3-6 ist das Spiel, welches durch eine Axialbewegung des armaturenseitigen Befestigungsteiles ausgeglichen werden kann, erkennbar durch die Schräge des Durchbruches bestimmt, der sich bei den Ausführungsbeispielen nach den Figuren 3 bis 5 im armaturenseitigen Befestigungsteil, beim Ausführungsbeispiel nach Figur 6 im wandseitigen Befestigungsteil befindet.

Ein Federelement, welches eine unbeabsichtigte Bewegung des Gleitsteines in dem zugeordneten Durchbruch verhindert, wurde zwar nur bei den Ausführungsbeispielen nach den Figuren 3 bis 6 dargestellt und beschrieben. Selbstverständlich ist es aber auch möglich und sinnvoll, ein derartiges Federelement bei dem Ausführungsbeispiel nach Figur 1 einzusetzen. Dies kann beispielsweise dadurch geschehen, daß der Feder 17 einen zusätzlichen Abschnitt erhält, der sich ähnlich der Feder 118 in eine Nut an der Begrenzungsfläche des Gleitsteines 9 hinein erstreckt und unter elastischer Verformung an der in Figur 1 linken Begrenzungsfläche 30 des Durchbruches 8 anliegt.

Alle Ausführungsbeispiele zeichnen sich dadurch aus, daß die äußere Stirnfläche des Gewindebolzens 11, 111, 211, 311 immer in Flucht mit der äußeren Stirnfläche des Befestigungsteiles bleibt, an welchem der Gewindebolzen gelagert ist. Dies ist aus ästhetischen Gesichtspunkten von Bedeutung.

## Patentansprüche

1. Einrichtung zur Befestigung einer sanitären Trockenarmatur mit
a) einem wandseitigen Befestigungsteil (1; 101; 201; 301), welches an einer Gebäudewand (3; 103; 203; 303) anschraubbar ist;
b) einem armaturenseitigen Befestigungsteil (6; 106; 206; 306), welches an dem wandseitigen Befestigungsteil (1; 101; 201; 301) unter Klemmwirkung festlegbar ist, wobei eines der beiden Befestigungsteile (6; 106; 206; 301) steckerartig in das jeweils andere Befestigungsteil (1; 101; 201; 306) eingreift, dadurch gekennzeichnet, daß
c) das steckerartig in das jeweils andere Befestigungsteil (1; 101; 201; 306) eingreifende Befestigungsteil (6; 106; 206; 301) einen quer zu seiner Achse verlaufenden Durchbruch (8; 108; 208; 308) aufweist, in dem ein Gleitstein (9; 109; 209; 309) verschiebbar aber unverdrehbar angeordnet ist,
d) in einer Ausnehmung (13; 113) des jeweils anderen Befestigungsteils (1; 101; 201; 306) ein Gewindebolzen (11; 111; 211; 311) gelagert und in axialer Richtung festgelegt ist, der durch eine Gewindebohrung (10; 110; 210; 310) des Gleitsteines (9; 109; 209; 309) derart hindurchgeführt ist, daß eine Verdrehung des Gewindebolzens (11; 111; 211; 311) eine Verschiebung des Gleitsteines (9; 109; 209; 309) in dem Durchbruch (8; 108; 208; 308) bewirkt;
e) eine Einrichtung (17, 30; 130, 131, 230, 231; 330, 331) vorgesehen ist, welche die Verschiebung des Gleitsteines (9; 109; 209; 309) in dem Durchbruch (8; 108; 208; 308) in eine Relativbewegung der beiden Befestigungsteile (1, 6; 101, 106; 201, 206; 301, 306) aufeinander zu oder voneinander weg umsetzt.

2. Einrichtung nach Anspruch 1, dadurch gekennzeichnet, daß die unter a) genannte Einrichtung eine Feder (17) umfaßt, welche bei der Bewegung des Gleitsteines (9) komprimierbar ist, hierbei ihre Abmessung quer zu dieser Bewegungsrichtung vergrößert und dabei eine Seitenfläche (30) des Durchbruches (8) mit einer Kraft beaufschlagt, welche die beiden Befestigungsteile (1, 6) zusammenzuziehen sucht.

3. Einrichtung nach Anspruch 2, dadurch gekennzeichnet, daß die Feder (17) eine gebogene Blattfeder ist.

4. Einrichtung nach Anspruch 2, dadurch gekennzeichnet, daß die Feder ein elastisches Kissen ist.

5. Einrichtung nach Anspruch 1, dadurch gekennzeichnet, daß die unter e) genannte Einrichtung eine schräg zur Achse der Befestigungsteile (101, 106; 201, 206; 301, 306) verlaufende Begrenzungsfläche (131; 231; 331) des Gleitsteines (109; 209; 309) ist, die mit einer parallelen Begrenzungsfläche (130; 230; 330) des Durchbruches (108; 208; 308) zusammenwirkt.

6. Einrichtung nach einem der vorhergehenden Ansprüche, gekennzeichnet durch ein Federelement (118; 218; 318), welches zwischen dem Gleitstein (109; 209; 309) und einer Begrenzungsfläche des Durchbruches (108; 208; 308) wirkt und eine unbeabsichtigte Verschiebung des Gleitsteines (109; 209; 309) innerhalb des Durchbruches (108; 208; 308) verhindert.

7. Einrichtung nach Anspruch 6 bei Rückbeziehung auf einen der Ansprüche 2-4, dadurch gekennzeichnet, daß das Federelement ein Bereich der Feder ist, welche die Bewegung des Gleitsteines in eine Relativbewegung der beiden Befestigungsteile umsetzt.

8. Einrichtung nach Anspruch 6 oder 7, dadurch gekennzeichnet, daß das Federelement (118) eine gebogene Blattfeder ist.

9. Einrichtung nach Anspruch 6 oder 7, dadurch gekennzeichnet, daß das Federelement (218; 318) ein einstückig an den Gleitstein (209; 309) angeformter Federbereich ist.

10. Einrichtung nach einem der vorhergehenden Ansprüche, dadurch gekennzeichnet, daß das wandseitige Befestigungsteil (1; 101; 201) becherförmig ausgebildet ist, mit seiner Bodenfläche (2; 102; 302) an der Gebäudewand (3; 103; 203) anliegt und an dieser mit einer zentralen Schraube (4; 104; 204) befestigt ist.

11. Einrichtung nach einem der Ansprüche 1-9, dadurch gekennzeichnet, daß das wandseitige Befestigungsteil (301) ein ebener Flansch ist, der im mittleren Bereich einen zylindrischen Vorsprung (320) aufweist, in welchem der Durchbruch (308) ausgebildet ist, daß das wandseitige Befestigungsteil (301) im äußeren Bereich mit mehreren Befestigungsschrauben (304) an der Gebäudewand (303) befestigt ist und daß das armaturenseitige Befestigungsteil (306) an seinem Ende einen zylindrischen Innenraum (305) aufweist, in den der zylindrische Vorsprung (320) des wandseitigen Befestigungsteils (301) einführbar ist.

12. Einrichtung nach Anspruch 11, dadurch gekennzeichnet, daß an das armaturenseitige Befestigungsteil (306) ein Ringflansch (312) angeformt ist, der den äußeren Bereich des wandseitigen Befestigungsteiles (301) mit den Befestigungsschrauben (304) abdeckt.

## Claims

1. Device for mounting a dry sanitary fitting, comprising
a) a wall mounting part (1; 101; 201; 301) which can be screwed to a wall (3; 103; 203; 303) of a building;
b) a fitting mounting part (6; 106; 206; 306) which can be fixed to the wall mounting part (1; 101; 201; 301) with a clamping action, one of the two mounting parts (6; 106; 206; 301) engaging in the respective other mounting part (1; 101; 201; 306) in the manner of a plug,
characterised in that
c) the mounting part (6; 106; 206; 301) that engages in the respective other mounting part (1; 101; 201; 306) in the manner of a plug has an opening (8; 108; 208; 308) extending transversely to its axis, in which opening a sliding block (9; 109; 209; 309) is so arranged that it can be displaced but not turned;
d) a threaded bolt (11; 111; 211; 311) is located and fixed in the axial direction in a recess (13; 113) of the respective other mounting part (1; 101; 201; 306), which threaded bolt is guided through a threaded bore (10; 110; 210; 310) in the sliding block (9; 109; 209; 309) in such a manner that turning of the threaded bolt (11; 111; 211; 311) causes the sliding block (9; 109; 209; 309) to move in the opening (8; 108; 208; 308);
e) a device (17, 30; 130, 131, 230, 231; 330, 331) is provided which converts the movement of the sliding block (9; 109; 209; 309) in the opening (8; 108; 208; 308) into a relative movement of the two mounting parts (1, 6; 101, 106; 201, 206; 301, 306) towards or away from each other.

2. Device according to claim 1, characterised in that the device mentioned under e) comprises a spring (17) which can be compressed when the sliding block (9) moves, thereby increasing its dimension transverse to that direction of movement and exerting on a side face (30) of the opening (8) a force that attempts to draw the two mounting parts (1, 6) together.

3. Device according to claim 2, characterised in that the spring (17) is a bent leaf spring.

4. Device according to claim 2, characterised in that the spring is a resilient cushion.

5. Device according to claim 1, characterised in that the device mentioned under e) is a boundary surface (131; 231; 331) of the sliding block (109; 209; 309), which boundary surface is inclined with respect to the axis of the mounting parts (101, 106; 201, 206; 301, 306) and cooperates with a parallel boundary surface (130; 230; 330) of the opening (108; 208; 308).

6. Device according to any one of the preceding claims, characterised by a resilient element (118; 218; 318) which acts between the sliding block (109; 209; 309) and a boundary surface of the opening (108; 208; 308) and prevents unintentional displacement of the sliding block (109; 209; 309) inside the opening (108; 208; 308).

7. Device according to claim 6 appended to one of claims 2 to 4, characterised in that the resilient element is a region of the spring that converts the movement of the sliding block into a relative movement of the two mounting parts.

8. Device according to claim 6 or 7, characterised in that the resilient element (118) is a bent leaf spring.

9. Device according to claim 6 or 7, characterised in that the resilient element (218; 318) is a resilient region integrally formed on the sliding block (209; 309).

10. Device according to any one of the preceding claims, characterised in that the wall mounting part (1; 101; 201) is cup-shaped, rests by its base (2; 102; 302) on the wall (3; 103; 203) of a building and is secured thereto by a central screw (4; 104; 204).

11. Device according to any one of claims 1 to 9, characterised in that the wall mounting part (301) is a flat flange having in its central region a cylindrical projecting part (320) in which the opening (308) is formed, the wall mounting part (301) is secured to the wall (303) of a building in the outer region by several fastening screws (304), and the fitting mounting part (306) has at its end a cylindrical interior (305) into which the cylindrical projecting part (320) of the wall mounting part (301) can be inserted.

12. Device according to claim 11, characterised in that there is formed on the fitting mounting part (306) an annular flange (312) which covers the outer region of the wall mounting part (301) having the fastening screws (304).

## Revendications

1. Dispositif de fixation d'un support d'accessoire de salle de bain comprenant :
a) un élément de fixation (1; 101; 201; 301) côté mur, qui peut être vissé sur un mur de bâtiment (3; 103 ; 203 ; 303),
b) un élément de fixation (6; 106; 206; 306) côté support d'accessoire, qui peut être fixé par serrage sur l'élément de fixation (1; 101; 201; 301) côté mur, sachant que l'un des deux éléments de fixation (6; 106; 206; 306) s'encastre comme une fiche dans l'autre élément de fixation (1; 101; 201; 301), caractérisé en ce que
c) l'élément de fixation (6; 106; 206; 306) qui s'encastre comme une fiche dans l'autre élément de fixation (1; 101; 201; 301) présente un passage (8; 108; 208 ; 308) s'étendant transversalement à son axe, dans lequel est disposé un coulisseau (9; 109; 209; 309) pouvant coulisser mais non pas tourner,
d) dans un évidement (13; 113) de l'autre élément de fixation (1; 101; 201; 301) est logé un boulon fileté (11; 11; 211; 311) fixé dans la direction axiale, qui traverse un taraudage (10; 110; 210; 310) du coulisseau (9; 109; 209; 309) de telle manière qu'une rotation du boulon fileté (11; 111; 211; 311) provoque un déplacement du coulisseau (9; 109; 209; 309) dans le passage (8; 108; 208; 308),
e) un dispositif (17; 30; 130; 131; 230; 231; 330; 331), qui transforme le déplacement du coulisseau (9; 109; 209; 309) dans le passage (8; 108; 208; 308) en un mouvement relatif de rapprochement ou d'éloignement des deux éléments de fixation (1, 6; 101, 106; 201, 206; 301, 306), est prévu.

2. Dispositif selon la revendication 1, caractérisé en ce que le dispositif cité en e) comprend un ressort (17) qui, lors du mouvement du coulisseau (9), peut être comprimé et, ce faisant, s'agrandit transversalement à cette direction de déplacement et sollicite une surface latérale (30) du passage (8) avec une force qui vise à rapprocher les deux éléments de fixation (1,6).

3. Dispositif selon la revendication 2, caractérisé en ce que le ressort (17) est un ressort à lame courbe.

4. Dispositif selon la revendication 2, caractérisé en ce. que le ressort est un coussin élastique.

5. Dispositif selon la revendication 1, caractérisé en ce que le dispositif cité en e) est une surface périphérique (131; 231; 331) du coulisseau (109; 209; 309) qui s'étend en biais par rapport à l'axe des éléments de fixation (101, 106; 201, 206; 301, 306) et qui coopère avec une surface périphérique (130; 230; 330) parallèle du passage (108; 208; 308).

6. Dispositif selon l'une des revendications précédentes, caractérisé par un élément de ressort (118; 218; 318) qui agit entre le coulisseau (109; 209; 309) et une surface périphérique du passage (108; 208; 308) et empêche un déplacement involontaire du coulisseau (109; 209; 309) à l'intérieur du passage (108; 208; 308).

7. Dispositif selon la revendication 6 en référence à l'une des revendications 2 à 4, caractérisé en ce que l'élément de ressort est une partie du ressort qui transforme le mouvement du coulisseau en un mouvement relatif des deux éléments de fixation.

8. Dispositif selon la revendication 6 ou 7, caractérisé en ce que l'élément de ressort (118) est un ressort à lame courbe.

9. Dispositif selon la revendication 6 ou 7, caractérisé en ce que l'élément de ressort (218 ; 318) est une partie du ressort réalisée d'un seul tenant sur le coulisseau (209; 309).

10. Dispositif selon l'une des revendications précédentes, caractérisé en ce que l'élément de fixation (1; 101; 201) côté mur est réalisé en forme de coupe, est appliqué avec son fond (2; 102; 202) contre le mur du bâtiment (3; 103; 203) et est fixé à ce dernier au moyen d'une vis (4; 104; 204) centrale.

11. Dispositif selon l'une des revendications 1 à 9, caractérisé en ce que l'élément de fixation (301) côté mur est une bride plane qui présente une saillie (320) cylindrique en son milieu, dans laquelle est réalisé le passage (308), en ce que l'élément de fixation (301) côté mur est fixé au mur du bâtiment (303) dans la zone extérieure à l'aide de plusieurs vis de fixation (304), et en ce que l'élément de fixation (306) côté support d'accessoire présente à son extrémité un espace intérieur (305) cylindrique dans lequel peut être introduite la saillie (320) cylindrique de l'élément de fixation (301) côté mur.

12. Dispositif selon la revendication 11, caractérisé en ce qu'une bride annulaire (312), qui recouvre la zone extérieure de l'élément de fixation (301) côté mur comportant les vis de fixation (304), est réalisée sur l'élément de fixation (306) côté support d'accessoire.
